# EUROPEAN PATENT APPLICATION

(11) **EP 1 679 505 A1**
(43) Date of publication of application: **12.07.2006**
(21) Application number: 04793042.5
(22) Date of filing: 27.10.2004
(51) Int. Cl.: G01N 23/227

(54) **ELECTRONIC SPECTRAL ANALYZING METHOD AND ANALYZER**

(30) Priority: 29.10.2003 JP 2003368372
(71) Applicant: Ulvac-PHI Incorporated, Chigasaki-shi, Kanagawa 253-0084 (JP)
(72) Inventor: SANADA, Noriaki, c/o ULVAC-PHI, INC.,, Chigasaki-shi, Kanagawa 2530084 (JP); OHASHI, Yoshiharu, c/o ULVAC-PHI, INC.,, Chigasaki-shi, Kanagawa 2530084 (JP); YAMAMOTO, Akira, c/o ULVAC-PHI, INC.,, Chigasaki-shi, Kanagawa 2530084 (JP); OIWA, Retsu, c/o ULVAC-PHI, INC.,, Chigasaki-shi, Kanagawa 2530084 (JP)
(74) Representative: Melzer, Wolfgang
(86) International application number: PCT/JP2004/015930
(87) International publication number: WO 2005/040778

(57) **Abstract**

[Task] The invention enables uniformly etching a surface of a sample with an improved repeatability, and etching at a low cost without requiring any large-scale equipment.

[Means for Solving the Problem] In an electron spectroscopy analytical apparatus (1) for executing an analysis of a composition, a chemical state and the like of a surface of a sample (4) or in a depth direction thereof by irradiating an X-ray to the sample (4) from a high-energy particle irradiating unit (6) within a vacuum chamber (2) under a vacuum atmosphere, and detecting a kinetic energy of electrons emitted from the sample (4) by an electric energy analyzer (7) on the basis of a photoelectric effect, the surface of the sample (4) is ion-etched by irradiating a fullerene ion beam to the surface of the sample (4) from an ion gun (8) before irradiating the high-energy particle to the sample (4).

## Description

### Technical Field

The present invention relates to an electron spectroscopy analysis method and analytical apparatus for executing a desired analysis with respect to a surface or a depth direction of a sample to be analyzed by irradiating a high-energy particle to the sample to be analyzed under a vacuum atmosphere and detecting a number and a kinetic energy of electrons emitted from the sample to be analyzed on the basis of a photoelectric effect.

### Background Art

The electron spectroscopy analytical apparatus is widely used in a correlation analysis of functional physical property, a quality control, a process analysis work and the like for improving a product performance, for example, with respect to various samples prepared in a developing process and a manufacturing step of the various samples. In particular, an X-ray photoelectron spectroscopy analytical apparatus employing a characteristic X-ray as the high-energy particle is widely used for analyzing contamination, a composition ratio of a composition material and the like at a depth of approximately 5 nm of a surface layer of a sample.

Furthermore, an ultraviolet ray photoelectron spectroscopy analytical apparatus employing an ultraviolet ray as the high-energy particle is widely used for analyzing a work function change, a chemical state of a composition material and the like at a depth of approximately 5 nm of a surface layer of a sample. Incidentally, an electron, a gamma ray, a synchrotron orbital radiation, a laser beam, an ion, a positron or the like may be used as the high-energy particle source, in addition thereto.

A photoelectron spectroscopy analysis method is an analysis method for analyzing an element within a sample by irradiating a high-energy light to a surface of a sample, and measuring a number and a kinetic energy of electrons emitted on the basis of a photoelectric effect. Since not only the photoelectric spectroscopy analysis method is capable of measuring an elemental composition on a surface of a sample but also the method is excellent in an analysis of a chemical state of a material, the photoelectric spectroscopy analysis method is utilized for an analysis of an oxidation state of an organic thin film sample, an oxidation state of silicon on a surface of a semiconductor device or the like. At this time, since the surface of the sample is unavoidably covered by a contaminant, such as oil, fat, water or the like, a preliminary washing treatment, which removes the contaminant generally by means of a sputtering ion source, is executed in many cases.

In the meanwhile, in a preliminary cleaning treatment of irradiating a rare gas ion (for example, an Ar ion) to a surface of a sample, which is widely used in a conventional photoelectron spectroscopy analytical apparatus, a surface damage is caused at the time of ion-etching the surface of the sample. Accordingly, a range, to which the preliminary cleaning treatment of irradiating the rare gas ion to the surface of the sample is applied, has been conventionally limited to an analysis of a metal or a semiconductor having a small surface damage, or an analysis of a very limited oxide.

Accordingly, in recent years, there have been proposed various methods as an etching method for a surface of a sample (see, for example, to patent document 1, non-patent document 2, patent document 3 and non-patent document 4).

In the patent document 1 mentioned above, there is disclosed an analysis method for preparing a sample showing information in a depth direction by cutting the sample by a known tool, such as a diamond cutter or the like.

In the non-patent document 2 mentioned above, it is described that a method for exposing an interior portion of a sample to a surface by cleavage or scribing of the sample and analyzing the interior portion of the sample by a surface analysis method is widely known.

In the patent document 3 mentioned above, it is disclosed that a contaminant having a small damage is removed by an etching of a surface of a sample using a cluster ion comprised of one hundred or more atomic atoms or molecules.

In the non-patent document 4 mentioned above, it is mentioned that a surface of a sample is cleaned by dashing dry ice small particles to a surface of a sample.
Patent Document 1
   Japanese Unexamined Patent Publication No. 2002-365183
Non-patent Document 2
   ASTM E1078-97 of American National Standard International Standard, Article 11, 3, 4, 1996
Patent Document 3
   Japanese Unexamined Patent Publication No. H08-122283
Non-patent Document 4
   J. Vac. Sci. Technol., B9, p. 1970, 1991

### Disclosure of Invention

### Problem to Be Solved by the Invention

At the time of using the methods of the patent document 1 and the non-patent document 2 mentioned above, as described in American National Standard International Standard (ASTM E1078-97, Article 11, 3, 4, 1996), it is necessary to uniformly etch at a range which is larger than a diameter of an analysis probe of an electron beam, an X-ray or the like and which corresponds to a magnitude of the analysis probe. Furthermore, particles, such as cut scraps or the like are frequently left on the surface of the sample, and it is preferred to make an analysis while avoiding them. Accordingly, in an analysis method which can employ a small probe, such as an Auger electron spectroscopy analysis, these analysis methods are generally used, however, these analysis methods are not suitable for an analysis method employing a comparatively large probe, such as a photoelectron spectroscopy analysis.

In the method of the patent document 3 mentioned above, since it is necessary to prepare a cluster by preparing high-pressure gas and utilizing a gas jet generated by a pressure difference from a vacuum chamber, a large-scale equipment is necessary for being used for a surface analysis requiring an ultra-high vacuum apparatus, and a cost is increased. Furthermore, since speeds of one hundred or more clusters are different depending on the number of the clusters, a surface irregularity tends to be caused, for example, in a scanned range, and it is difficult to execute a uniform etching.

In the non-patent document 4 mentioned above, since a neutral particle is employed in place of an ion, a repeatability does not exist in an operation, and it is difficult to quantitatively estimate an etching amount. Furthermore, in order to apply the non-patent document 4 to an analysis of a surface of a sample, it is necessary to execute the analysis by an analytical apparatus under an ultra-high vacuum. Therefore, the large-scale equipment is required in the same manner as in the case of the cluster ion mentioned above, and the cost is also increased.

Accordingly, an object of the present invention is to provide an electron spectroscopy analysis method and analytical apparatus which can uniformly etch a surface of a sample with an improved repeatability, and can etch at a low cost without requiring any large-scale equipment.

### Means for Solving the Problem

In order to achieve the above-mentioned object, in accordance with a first aspect of the present invention, there is provided an electron spectroscopy analysis method for executing a desired analysis with respect to a surface of a sample to be analyzed by irradiating a high-energy particle to the sample to be analyzed under a vacuum atmosphere, and detecting a number and a kinetic energy of electrons emitted from the sample to be analyzed on the basis of a photoelectric effect, wherein the method includes steps of ionizing a fullerene, irradiating the fullerene ionized to the surface of the sample to be analyzed before irradiating the high-energy particle to the sample to be analyzed, and removing a contaminant present on the surface of the sample to be analyzed.

Furthermore, in accordance with a second aspect of the present invention, there is provided an electron spectroscopy analysis method for executing a desired analysis with respect to a depth direction of a sample to be analyzed by irradiating a high-energy particle to the sample to be analyzed under a vacuum atmosphere, and detecting a number and a kinetic energy of electrons emitted from the sample to be analyzed on the basis of a photoelectric effect, wherein the method includes steps of ionizing a fullerene, irradiating the fullerene ionized to the surface of the sample to be analyzed before irradiating the high-energy particle to the sample to be analyzed, and ion-etching the surface of the sample to be analyzed.

Furthermore, in accordance with a sixth aspect of the present invention, there is provided an electron spectroscopy analytical apparatus for executing a desired analysis with respect to a surface of a sample to be analyzed by irradiating a high-energy particle to the sample to be analyzed from a high-energy particle irradiating unit under a vacuum atmosphere, and detecting a number and a kinetic energy of electrons emitted from the sample to be analyzed by an analyzer on the basis of a photoelectric effect, wherein the apparatus includes an ion gun for ionizing a fullerene and irradiating the fullerene ionized, and the apparatus ionizes the fullerene, and irradiates the fullerene ionized from the ion gun to the surface of the sample to be analyzed before irradiating the high-energy particle to the sample to be analyzed, thereby removing a contaminant present on the surface of the sample to be analyzed.

Furthermore, in accordance with a seventh aspect of the present invention, there is provided an electron spectroscopy analytical apparatus for executing a desired analysis with respect to a depth direction of a sample to be analyzed by irradiating a high-energy particle to the sample to be analyzed from a high-energy particle irradiating unit under a vacuum atmosphere, and detecting a number and a kinetic energy of electrons emitted from the sample to be analyzed by an analyzer on the basis of a photoelectric effect, wherein the apparatus includes an ion gun for ionizing a fullerene and irradiating the fullerene ionized, and the apparatus ionizes the fullerene and irradiates the fullerene ionized from the ion gun to the surface of the sample to be analyzed before irradiating the high-energy particle to the sample to be analyzed, and ion-etches the surface of the sample to be analyzed.

### Effect of the Invention

In accordance with the present invention, it is possible to uniformly apply an etching process to a surface of a sample to be analyzed to such a level that a damage on the surface of the sample to be analyzed is negligible even when a contaminant on the surface of the sample to be analyzed is removed, by irradiating a fullerene ion beam to the surface of the sample to be analyzed before irradiating a high-energy particle to the surface of the sample to be analyzed. Accordingly, it is possible to precisely analyze a composition, a chemical state and the like of the sample to be analyzed.

Furthermore, since an ion gun irradiating a fullerene ion beam is not large, as compared with an apparatus forming a cluster (an ion source), a large-scale equipment is not required, and it is possible to restrict a cost increase. Best Mode for Carrying Out the Invention

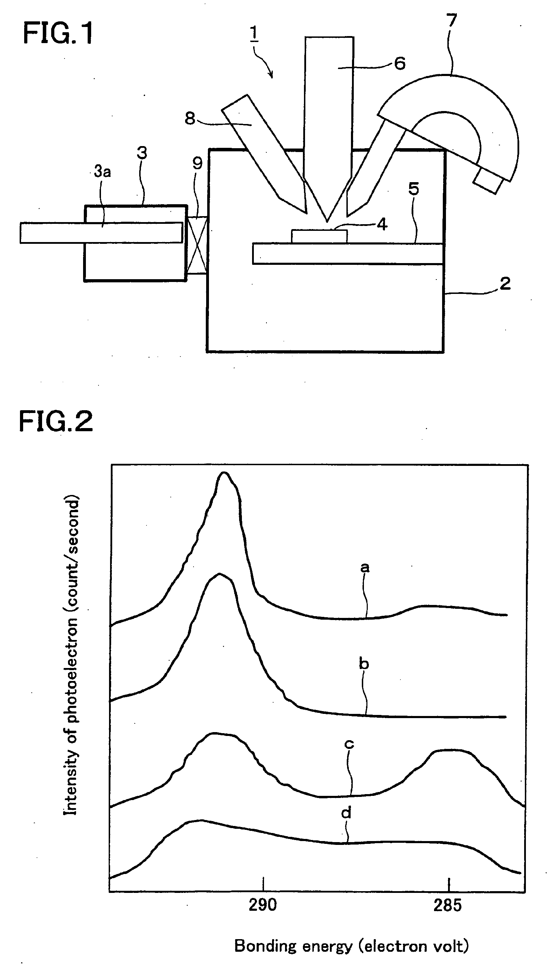

A description will be given below of illustrated embodiments in accordance with the present invention.
<Embodiment 1>
Fig. 1 is a skeleton schematic view showing an electron spectroscopy analytical apparatus in accordance with an embodiment 1 of the present invention. An electron spectroscopy analytical apparatus 1 in accordance with the present embodiment is provided with a vacuum chamber 2 to which a vacuum pump system (not shown) is connected, as shown in Fig. 1. And a sample stage 5 for arranging and fixing a sample (an analyzed object) 4 to be carried from an external portion by the carrier device 3 is provided within the vacuum chamber 2.

Furthermore, in an upper portion of the vacuum chamber 2, there are placed a high-energy particle irradiating unit 6 irradiating a high-energy particle (an X-ray in the present embodiment) to the sample 4 mounted on the sample stage 5, an electron energy analyzer 7 for analyzing an energy of electrons emitted from the surface of the sample 4 by the high-energy particle irradiated to the surface of the sample 4 from the high-energy particle irradiating unit 6, and an ion gun 8 irradiating a C60 ion beam (carbon 60 cluster ion beam) to the surface of the sample 4. As the ion gun 8 irradiating the C60 ion beam, a known ion gun can be employed. In the present embodiment, as the high-energy particle irradiating unit 6, a dual characteristic X-ray source provided with a target of aluminum and copper is used.

Next, a description will be given of an electron spectroscopy analysis method by the electron spectroscopy analytical apparatus 1 in accordance with the embodiment 1 of the present invention mentioned above. In the present embodiment, a polytetrafluoroethylene (PTFE) ((CF₂)ₙ) is employed as the sample 4, and an X-ray photoelectron spectroscopy analysis of the polytetrafluoroethylene (PTFE) ((CF₂)ₙ) as the sample 4 is executed.

First, the sample 4 is mounted on the sample stage 5 within the vacuum chamber 2 regulated to a predetermined pressure through an open gate valve 9 by driving a carrier arm 3a within the carrier device 3 which is regulated to a predetermined pressure (a degree of vacuum) by evacuating using a vacuum pump system (not shown). The pressure within the vacuum chamber 2 is not particularly limited, however, in view of preventing contamination or the like on the surface of the sample 4, it is preferred to set the pressure to 1 × 10⁻⁵ Pa or less. In the present embodiment, the pressure within the vacuum chamber 2 is set to 5 × 10⁻⁷ Pa.

Furthermore, the ion gun 8 is actuated and the C60 ion beam is irradiated to the surface of the sample (polytetrafluoroethylene (PTFE) ((CF₂)ₙ)) 4. On the basis of the collision of the C60 ion beam with the surface of the sample 4, a contaminant, such as water, oil, fat, an inorganic material or the like and an oxide film attached to the surface of the sample 4 are uniformly etched so as to be removed. The irradiation conditions of the C60 ion beam in the present embodiment at this time are set such that the accelerating voltage is 2 kV, the ion current is 10 nA, the irradiating time is 60 sec, and the scanning range on the surface of the sample 4 is 5 mm × 5 mm.

Thereafter, a composition, a chemical state change and the like on the surface or in the depth direction of the sample 4 are analyzed (by an X-ray photoelectron spectroscopy analysis) by the electron energy analyzer 7, on the basis of the electrons emitted from the sample 4 by actuating the high-energy particle irradiating unit (the dual characteristic X-ray source) 6 and irradiating the characteristic X-ray to the surface of the sample 4. The irradiated characteristic X-ray in the present embodiment at this time has an energy of 1.4867 keV, and aluminum is employed as a target of the characteristic X-ray.

For the electron spectroscopy analysis by means of the X-ray beam mentioned above, it is necessary to restrict a damage on the surface of the sample 4 caused by the C60 ion beam irradiated from the ion gun 8 to the minimum. Taking the above-mentioned points into consideration, in order to securely acquire an X-ray photoelectron spectroscopy spectrum as mentioned below, the accelerating voltage of the C60 ion beam is preferably 30 kV or less, and more preferably 10 kV or less and 300 V or more.

As mentioned above, in accordance with the embodiment 1 of the present invention, the uniform etching process is executed by irradiating the C60 ion beam to the surface of the sample (polytetrafluoroethylene (PTFE) ((CF₂)ₙ)) 4 from the ion gun 8 before irradiating the characteristic X-ray to the surface of the sample 4 from the high-energy particle irradiating unit (the dual characteristic X-ray source) 6, whereby a contaminant, such as water, oil, fat, an inorganic material or the like and an oxide film attached to the surface of the sample 4 are removed. In order to evaluate the effect of the etching process on the surface of the sample 4 on the basis of the irradiation of the C60 ion beam, the quantitative value of the surface of the sample 4 is measured. As a result, carbon is approximately 35 %, fluorine is approximately 65 %, and other elements are hardly detected.

The results of the quantitative value are sufficient to estimate that the chemical composition of the sample 4 is constituted by the polytetrafluoroethylene (PTFE) ((CF₂)ₙ), and as a result of observing the surface of the sample 4 by an electron microscope, the damage on the surface of the sample 4 is small enough to be negligible.

In the meanwhile, the quantitative value on the surface of the sample 4 in the case wherein the C60 ion beam is not irradiated to the surface of the sample (polytetrafluoroethylene (PTFE) ((CF₂)ₙ)) 4 is measured. As a result, carbon is approximately 46 %, fluorine is approximately 49 %, oxygen is approximately 3 %, and sodium is approximately 2 %. As mentioned above, since the surface of the sample 4 is contaminated in the atmospheric air, not only the elements which are not contained in the sample 4 are detected, but also a quantitative value which is far from the quantitative value in the inner portion of the sample 4 is obtained.

Furthermore, in the embodiment 1 in accordance with the present invention mentioned above, the C60 ion beam is irradiated to the surface of the sample (polytetrafluoroethylene (PTFE) ((CF₂)ₙ)) 4, however, the quantitative value on the surface of the sample 4 in the case wherein an Ar ion is irradiated to the sample (polytetrafluoroethylene (PTFE) ((CF₂)ₙ)) 4 is measured for a comparison purpose. As a result, carbon is approximately 51 %, fluorine is approximately 46 %, and argon is approximately 3 %. The irradiation conditions of the Ar ion for the comparison are set such that the accelerating voltage is 500 V, the ion current is 100 nA, the irradiating time is 60 sec, and the scanning range on the surface of the sample is 5 mm × 5 mm.

In this case, the oxygen and the sodium constituting the contamination elements on the surface of the sample 4 are removed by the etching by the Ar ion, however, the ratio of carbon to fluorine is far from the original ratio (approximately 33 % and approximately 67 %, respectively), and the quantitative results show that carbon is present more than fluorine. In other words, the quantitative value is far from the composition of the inner portion of the sample 4. Furthermore, as a result of observing the surface of the sample 4 by the electron microscope in the case of irradiating the Ar ion, a damage which is not negligible is recognized on the surface of the sample 4.

As mentioned above, in accordance with the present embodiment, since the surface of the sample 4 can be uniformly etched to the level at which the damage on the surface of the sample 4 is negligible, by irradiating the C60 ion beam to the surface of the sample 4 before irradiating the characteristic X-ray to the surface of the sample 4, thereby enabling removing a contaminant and an oxide film on the surface of the sample 4, it is possible to execute precise qualitative and quantitative analyses of the sample 4.

Furthermore, since the ion gun 8 irradiating the C60 ion beam is not large, as compared with a unit forming a cluster (an ion source), a large-scale equipment is not required, and a cost increase can be restricted.
<Embodiment 2>
In the present embodiment, the X-ray photoelectron spectroscopy analysis of the polytetrafluoroethylene (PTFE) ((CF₂)ₙ) as the sample 4 is executed by using the electron spectroscopy analytical apparatus 1 in accordance with the embodiment 1 shown in Fig. 1. The structure of the electron spectroscopy analytical apparatus 1 is approximately the same as in the embodiment 1, and an overlapping description will not be repeated here.

A description will be given of an electron spectroscopy analysis method by an electron spectroscopy analytical apparatus 1 in accordance with an embodiment 2 of the present invention.

First, the sample 4 is mounted on the sample stage 5 within the vacuum chamber 2 through the open gate valve 9 by driving the carrier arm 3a of the carrier device 3 in the same manner as in the embodiment 1. Thereafter, the inner side of the vacuum chamber 2 is evacuated by a connected vacuum pump system (not shown) so as to be regulated to a predetermined pressure (a predetermined degree of vacuum), by closing the gate valve 9. In the present embodiment, the pressure within the vacuum chamber 2 is set to 5 × 10⁻⁷ Pa.

Furthermore, the ion gun 8 is actuated and the C60 ion beam is irradiated to the surface of the sample (polytetrafluoroethylene (PTFE) ((CF₂)ₙ)) 4. On the basis of the collision of the C60 ion beam with the surface of the sample 4, a contaminant, such as water, oil, fat, an inorganic material or the like and an oxide film attached to the surface of the sample 4 are etched so as to be removed. The irradiation conditions of the C60 ion beam in the present embodiment at this time are set such that the accelerating voltage is 200 V to 30 kV, the ion current is 10 nA, the irradiating time is 60 sec, and the scanning range on the surface of the sample 4 is 5 mm × 5 mm.

Thereafter, a composition, a chemical state change and the like on the surface or in the depth direction of the sample 4 are analyzed (by an X-ray photoelectron spectroscopy analysis) by the electron energy analyzer 7, on the basis of the electrons emitted from the sample 4 by actuating the high-energy particle irradiating unit (the dual characteristic X-ray source) 6 and irradiating the characteristic X-ray to the surface of the sample 4. The irradiated characteristic X-ray in the present embodiment at this time has an energy of 8.048 keV, and copper is employed as a target of the characteristic X-ray.

Fig. 2 shows the results of an X-ray photoelectron spectroscopy analysis (XPS spectrum) of carbon 1s line after irradiating the C60 ion beams having accelerating voltages of 10 kV (a in Fig. 2), 2 kV (b in Fig. 2) and 200 V (c in Fig. 2), respectively, to the surface of the sample 4, and etching the surface of the sample 4. The irradiating conditions of the C60 ion beam at this time are set such that the ion current is 10 nA and the irradiating time is 60 sec.

Additionally, d in Fig. 2 shows the results of an X-ray photoelectron spectroscopy analysis (XPS spectrum) of carbon 1s line after irradiating an Ar ion having an accelerating voltage of 500 V to the surface of the sample 4, and etching the surface of the sample 4. The irradiating conditions of the Ar ion at this time are set such that the ion current is 100 nA and the irradiating time is 60 sec.

As shown in Fig. 2, in the case of the present embodiment in which the C60 ion beam is irradiated at the accelerating voltage of 2 kV (b in Fig. 2), the position of the XPS spectrum of the carbon 1s line becomes 293 eV (electron volt) showing a CF bond, and approximately coincides with a publication (Briggs and Beamson, Handbook of X-ray Photoelectron Spectroscopy of Polymer, Wiley, 1991). In this case, in the case wherein the C60 beam is irradiated at an accelerating voltage of 3 kV, approximately the same results can be obtained.

On the other hand, in the case wherein the C60 ion beam is irradiated at the accelerating voltage of 10 kV (a in Fig. 2), a little change in properties of the sample is recognized (practically having no problem). In the case wherein the C60 ion beam is irradiated at the accelerating voltage of 200 V (c in Fig. 2), the etching process on the surface of the sample is hardly executed, and a peak is recognized in the XPS spectrum on the basis of the contamination on the surface of the sample. In the case wherein the C60 ion beam is irradiated at an accelerating voltage of 300 V, the etching process on the surface of the sample is executed, and the change in properties of the sample is hardly recognized. Furthermore, in the case wherein the Ar ion is irradiated at an accelerating voltage of 500 V (d in Fig. 2), the shape of the peak of the XPS spectrum is different, and the change in properties of the sample is recognized. Furthermore, in the case wherein the C60 ion beam is irradiated at an accelerating voltage of 30 kV, the degree of the change in properties of the sample practically has no problem.

As is apparent from the above-mentioned results, in order to securely acquire an X-ray photoelectron spectroscopy spectrum, the accelerating voltage of the irradiated C60 ion beam is preferably 30 kV or less, and more preferably 10 kV or less and 300 V or more.

Furthermore, in each of the embodiments mentioned above, the characteristic X-ray source irradiating the characteristic X-ray is used as the high-energy particle irradiating unit 6, however, it is possible to use an ultraviolet ray photoelectron spectroscopy analytical apparatus irradiating an ultraviolet ray, an Auger electron spectroscopy analytical apparatus irradiating an electron, a positron exciting Auger electron spectroscopy analytical apparatus irradiating a positron, or the like in addition thereto.

Furthermore, each of the embodiments mentioned above is structured such that the sample 4 is carried within the vacuum chamber 2 after evacuating the inner side of the vacuum chamber 2 by the vacuum pump system (not shown) so as to be regulated to the predetermined pressure (degree of vacuum), however, the structure may be made such that after mounting the sample 4 within the vacuum chamber 2, the inner side of the vacuum chamber 2 is evacuated by the vacuum pump system (not shown) so as to be regulated to the predetermined pressure (degree of vacuum).

Furthermore, each of the embodiments mentioned above is structured such that the C60 ion beam is irradiated from the ion gun 8, however, the structure may be made such that a fullerene, for example, C70 and C84, an endohedral metalfullerene or the like is ionized so as to be irradiated, in addition thereto.

### Brief Description of Drawings

Fig. 1 is a skeleton schematic view showing an electron spectroscopy analytical apparatus in accordance with embodiments 1 and 2 of the present invention; and
Fig. 2 is a view showing results of an X-ray photoelectron spectroscopy analysis of carbon 1s line after irradiating a C60 ion beam to a surface of a sample by changing an accelerating voltage.

### Description of Reference Numerals

- 1: Electron spectroscopy analytical apparatus
- 2: Vacuum chamber
- 3: Carrier device
- 4: Sample (sample to be analyzed)
- 6: High-energy particle irradiating unit
- 7: Electron energy analyzer (analyzer)
- 8: Ion gun

## Claims

1. An electron spectroscopy analysis method for executing a desired analysis with respect to a surface of a sample to be analyzed by irradiating a high-energy particle to said sample to be analyzed under a vacuum atmosphere, and detecting a number and a kinetic energy of electrons emitted from said sample to be analyzed on the basis of a photoelectric effect, wherein the method comprises steps of ionizing a fullerene, irradiating the fullerene ionized to the surface of said sample to be analyzed before irradiating the high-energy particle to said sample to be analyzed, and removing a contaminant present on the surface of said sample to be analyzed.

2. An electron spectroscopy analysis method for executing a desired analysis with respect to a depth direction of a sample to be analyzed by irradiating a high-energy particle to said sample to be analyzed under a vacuum atmosphere, and detecting a number and a kinetic energy of electrons emitted from said sample to be analyzed on the basis of a photoelectric effect, wherein the method comprises steps of ionizing a fullerene, irradiating the fullerene ionized to the surface of said sample to be analyzed before irradiating the high-energy particle to said sample to be analyzed, and ion-etching the surface of said sample to be analyzed.

3. The electron spectroscopy analysis method according to claim 1 or 2, wherein a fullerene having an atomicity of 100 or less is used as said fullerene.

4. The electron spectroscopy analysis method according to claim 3, wherein C60, C70 or C84 is used as said fullerene having an atomicity of 100 or less.

5. The electron spectroscopy analysis method according to claim 3, wherein an endohedral fullerene in C60, C70 or C84 is used as said fullerene having an atomicity 100 or less.

6. An electron spectroscopy analytical apparatus for executing a desired analysis with respect to a surface of a sample to be analyzed by irradiating a high-energy particle to said sample to be analyzed from a high-energy particle irradiating unit under a vacuum atmosphere, and detecting a number and a kinetic energy of electrons emitted from said sample to be analyzed by an analyzer on the basis of a photoelectric effect, wherein the apparatus comprises an ion gun for ionizing a fullerene and irradiating the fullerene ionized, and the apparatus ionizes the fullerene and irradiates the fullerene ionized from said ion gun to the surface of said sample to be analyzed before irradiating the high-energy particle to said sample to be analyzed, thereby removing a contaminant present on the surface of said sample to be analyzed.

7. An electron spectroscopy analytical apparatus for executing a desired analysis with respect to a depth direction of a sample to be analyzed by irradiating a high-energy particle to said sample to be analyzed from a high-energy particle irradiating unit under a vacuum atmosphere, and detecting a number and a kinetic energy of electrons emitted from said sample to be analyzed by an analyzer on the basis of a photoelectric effect, wherein the apparatus comprises an ion gun for ionizing a fullerene and irradiating the fullerene ionized, and the apparatus ionizes the fullerene and irradiates the fullerene ionized from said ion gun to the surface of said sample to be analyzed before irradiating the high-energy particle to said sample to be analyzed, and ion-etches the surface of said sample to be analyzed.

8. The electron spectroscopy analytical apparatus according to claim 6 or 7, wherein a fullerene having an atomicity of 100 or less is used as said fullerene.

9. The electron spectroscopy analytical apparatus according to claim 8, wherein C60, C70 or C84 is used as said fullerene having an atomicity of 100 or less.

10. The electron spectroscopy analytical apparatus according to claim 8, wherein an endohedral fullerene in C60, C70 or C84 is used as said fullerene having an atomicity of 100 or less.
